# EUROPÄISCHE PATENTANMELDUNG

(11) **EP 3 719 327 A1**
(43) Veröffentlichungstag der Anmeldung: **07.10.2020**
(21) Anmeldenummer: 20160992.2
(22) Anmeldetag: 04.03.2020
(51) Int. Cl.: F16B 5/02

(54) **VORRICHTUNG, GEWINDEBOHRER UND SYSTEM ZUM BEFESTIGEN EINES BAUELEMENTS**

(30) Priorität: 01.04.2019 DE 202019101856 U
(71) Anmelder: Mungo Befestigungstechnik AG, 4600 Olten (CH)
(72) Erfinder: PIROZZI, Massimo, 4600 Olten (CH)
(74) Vertreter: Eisenführ Speiser

(57) **Zusammenfassung**

Die Erfindung betrifft eine Vorrichtung (1) zum Befestigen eines Bauelements in einem Abstand zu einem tragenden Bauteil, aufweisend: einen ein vorderes Ende (3) und ein hinteres Ende (5) aufweisenden Bolzen (2), ein für ein Eindrehen in das Bauteil geeignetes, vorderes Gewinde (6) in einem vorderen Abschnitt (4) an dem vorderen Ende (3) des Bolzens (2), und eine aus thermisch isolierendem Material gebildete und ein für ein Eindrehen in das Bauelement geeignetes, hinteres Gewinde (14) aufweisende Ummantelung (10) eines hinteren Kopfabschnitts (8) am hinteren Ende (5) des Bolzens (2), dadurch gekennzeichnet, dass die Ummantelung (10) sowohl den Kopfabschnitt (8) als auch das hintere Ende (5) des Bolzens (2) umschließt.

## Beschreibung

Die Erfindung betrifft eine Vorrichtung, Gewindebohrer und ein System zum Befestigen eines Bauelements in einem Abstand zu einem tragenden Bauteil entsprechend den Oberbegriffen der unabhängigen Ansprüche.

Vorrichtungen der eingangs genannten Art sind aus dem Stand der Technik bekannt. So zeigt beispielsweise die europäische Patentschrift EP 0 935 075 B1 eine derartige Vorrichtung zum Befestigen eines Bauelements in einem Abstand zu einem tragenden Bauteil.

Aufgabe der vorliegenden Erfindung ist es, eine Vorrichtung, Gewindebohrer und/oder ein System zum Befestigen eines Bauelements in einem Abstand zu einem tragenden Bauteil der eingangs genannten Art zur Verfügung zu stellen, die gegenüber den bekannten Vorrichtungen, Gewindebohrern und/oder Systemen verbessert sind.

Diese Aufgabe wird gelöst durch die Gegenstände der unabhängigen Ansprüche.

Die Vorteile der vorliegenden Erfindung liegen insbesondere darin, dass aufgrund der vollständigen Ummantelung des kopfseitigen Endes der Vorrichtung mit einem thermisch isolierenden Material eine vollständige thermische Entkopplung zwischen dem kopfseitigen Ende der Vorrichtung und dem dem kopfseitigen Ende gegenüberliegenden Ende der Vorrichtung zur Verfügung gestellt wird. Durch diese bis auf vernachlässigbare Anteile vollständige thermische Entkopplung wird sichergestellt, dass die verwendete Vorrichtung keine Kältebrücke zwischen einer Außenumgebung außerhalb des Bauelements und dem tragenden Bauteil, an dem das Bauelement befestigt ist, darstellt. Auf diese Weise kann beispielsweise dann, wenn es sich bei dem tragenden Bauteil um die Außenwand eines Gebäudes handelt und bei dem zu befestigenden Bauelement um eine Verkleidungsplatte, eine große Menge von Energie gegenüber aus dem Stand der Technik bekannten Distanzschrauben eingespart werden.

Eine bevorzugte Ausführungsform der Erfindung sieht vor, dass die Ummantelung aus aufgespritztem Kunststoff besteht.

Eine bevorzugte Ausführungsform der Erfindung sieht vor, dass es sich bei dem Kunststoff um den Kunststoff PA6-35 (Polyamid 6 mit 35 % Glasfaserverstärkung) und/oder den Kunststoff PA6-50 (Polyamid 6 mit 50 % Glasfaserverstärkung) handelt.

Eine bevorzugte Ausführungsform der Erfindung sieht vor, dass der Bolzen aus, bevorzugt galvanisiertem, Stahl besteht.

Eine bevorzugte Ausführungsform der Erfindung sieht vor, dass die Ummantelung direkt auf den Kopfabschnitt aufgebracht ist.

Eine bevorzugte Ausführungsform der Erfindung sieht vor, dass die Ummantelung verdrehsicher auf den Kopfabschnitt aufgebracht ist.

Eine bevorzugte Ausführungsform der Erfindung sieht vor, dass ein das hintere Ende des Bolzens umschließender Teil der Ummantelung einen für ein Einschraubwerkzeug zum Einschrauben der Vorrichtung geeigneten Angriff aufweist.

Eine bevorzugte Ausführungsform der Erfindung sieht vor, dass es sich bei dem Angriff um einen Angriff in Form eines Torx handelt.

Eine bevorzugte Ausführungsform der Erfindung sieht vor, dass die Ummantelung das hintere Ende des Bolzens derart umschließt, dass es zu einer im Wesentlichen vollständigen thermischen Entkopplung zwischen dem Bolzen und einer ein hinteres Ende der Vorrichtung bildenden Stirnfläche der Ummantelung kommt.

Weitere bevorzugte Ausführungsformen sind in den Unteransprüchen angegeben.

Darüber hinaus wird unabhängig Schutz beansprucht für einen Gewindebohrer zur Vorbereitung eines tragenden Bauteils für das Eindrehen einer Vorrichtung, die in einem vorderen Abschnitt an einem vorderen Ende eines Bolzens ein Gewinde aufweist, wobei es sich bei der Vorrichtung bevorzugt um eine Vorrichtung der vorstehend beschriebenen Art handelt, wobei der Gewindebohrer einen insbesondere bezüglich Steigung und Durchmesser zu dem Gewinde des Bolzens passenden Gewindeschneideabschnitt aufweist.

Darüber hinaus wird unabhängig Schutz beansprucht für einen Gewindebohrer zur Vorbereitung eines Bauelements für das Eindrehen einer Vorrichtung, die in einem hinteren Abschnitt an einem hinteren Ende eines Bolzens ein Gewinde aufweist, wobei es sich bei der Vorrichtung bevorzugt um eine Vorrichtung der vorstehend beschriebenen Art handelt, wobei der Gewindebohrer einen insbesondere bezüglich Steigung und Durchmesser zu dem Gewinde des Bolzens passenden Gewindeschneideabschnitt aufweist.

Bevorzugt weisen die erfindungsgemäßen Gewindebohrer auf der einem Einspannabschnitt des Gewindebohrers abgewandten Seite des Gewindeschneideabschnittes einen Bohrabschnitt auf.

Weiterhin wird unabhängig Schutz beansprucht für ein System, aufweisend eine Vorrichtung der vorstehend beschriebenen Art mit einem Gewindebohrer der vorstehend an erster Stelle beschriebenen Art zur Vorbereitung eines tragendenden Bauteils für das Eindrehen einer solchen Vorrichtung, und/oder mit einem Gewindebohrer der vorstehend an zweiter Stelle beschriebenen Art zur Vorbereitung eines Bauelementes für das Eindrehen einer solchen Vorrichtung.

Eine besondere Ausführungsform der Erfindung wird beispielhaft anhand der beiliegenden Figuren beschrieben. Gleiche oder funktionsgleiche Teile sind mit den gleichen Bezugszeichen bezeichnet. Es zeigen:
- Figur 1: eine perspektivische Ansicht einer Ausführungsform der Erfindung;
- Figur 2: einen Längsschnitt durch die Ausführungsform der Figur 1 gemäß Figur 2a;
- Figur 2a: einen Querschnitt durch die Figur 2;
- Figur 3: eine Seitenansicht einer ersten Ausführungsform eines erfindungsgemäßen Gewindebohrers; und
- Figur 4: eine Seitenansicht einer zweiten Ausführungsform eines erfindungsgemäßen Gewindebohrers.

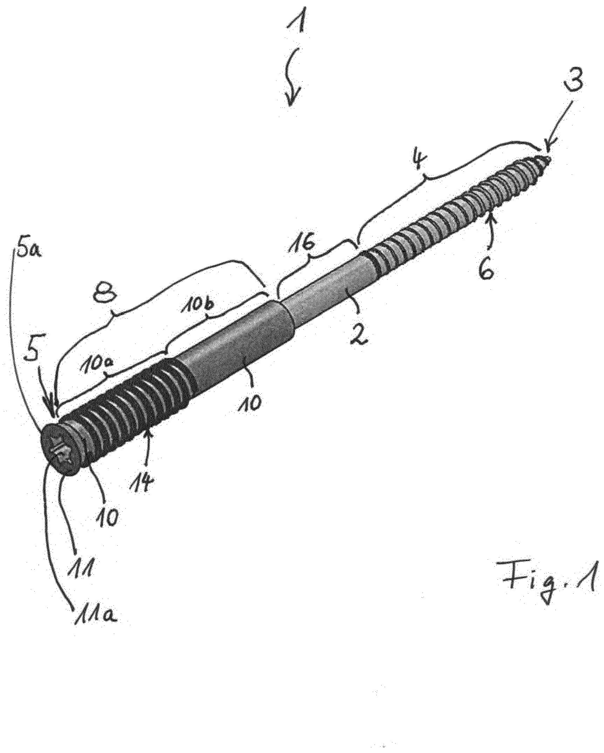

Figur 1 zeigt eine perspektivische Ansicht einer Ausführungsform der Erfindung. Die dargestellte Schraube 1 wird auch Distanzschraube genannt, da sie eine erfindungsgemäße Vorrichtung zum Befestigen eines nicht dargestellten Bauelements in einem Abstand zu einem nicht dargestellten tragenden Bauteil darstellt. Hierzu weist die Vorrichtung 1 einen ein vorderes Ende 3 und ein hinteres Ende 5 aufweisenden Bolzen 2 auf, ein für ein Eindrehen in das Bauteil geeignetes, vorderes Gewinde 6 in einem vorderen Abschnitt 4 an dem vorderen Ende 3 des Bolzens 2, und eine aus thermisch isolierendem Material gebildete und eine ein für ein Eindrehen in das Bauelement geeignetes, hinteres Gewinde 14 aufweisende Ummantelung 10 eines hinteren Kopfabschnitts 8 am hinteren Ende 5 des Bolzens 2 auf.

Durch die auf der Distanzschraube 1 in einem Abstand zueinander angeordneten Gewinde 6 beziehungsweise 14 ist es möglich, das nicht dargestellte Bauelement in einem Abstand von dem nicht dargestellten tragenden Bauteil zu befestigen. Hierzu wird die Distanzschraube 1 zunächst durch eine Bohrung in einem zu befestigenden Bauelement hindurch geführt und dann mit ihrem vorderen Gewinde 6 beispielsweise in ein mit einem Dübel versehenes Loch in der als tragendes Bauteil dienenden Außenwand des Gebäudes eingeschraubt. Im Zuge dessen kommt auch das hintere Gewinde 14 auf der Kopfüberspritzung 10 der Distanzschraube 1 mit der vorgenannten Bohrung in dem zu befestigenden Bauelement in Eingriff, so dass als Resultat das zu befestigende Bauelement in einem dem Abstand der Gewinde 6 bzw. 14 entsprechenden Abstand an der Außenwand des Gebäudes befestigt ist. Im Übrigen sind weitere Details dieser aus dem Stand der Technik bekannten Befestigungsmethode dem Fachmann geläufig.

Bei dem nicht dargestellten tragenden Bauteil kann es sich beispielsweise um die Außenwand eines Gebäudes handeln, während es sich bei dem nicht dargestellten Bauelement beispielsweise um eine Verkleidungsplatte zum Verkleiden dieser Außenwand handeln kann.

Der Bolzen 2 besteht bevorzugt aus Stahl, weiter bevorzugt aus galvanisiertem Stahl. Die Ummantelung 10, im Folgenden auch Kopfüberspritzung genannt, besteht bevorzugt aus Kunststoff, weiter bevorzugt aus dem Kunststoff PA6-35 (Polyamid 6 mit 35 % Glasfaserverstärkung) und/oder dem Kunststoff PA6-50 (Polyamid 6 mit 50 % Glasfaserverstärkung). Die Kopfüberspritzung 10 umschließt sowohl den kopfseitigen oder hinteren Kopfabschnitt 8 des Stahlbolzens 2 als auch das hintere Ende 5 des Bolzens 2 vollständig. Dies bedeutet, dass auch eine am Kopfabschnitt 8 zu erkennende Stirnfläche 11 vollständig aus der thermisch isolierenden Kopfüberspritzung 10 besteht.

Die Ummantelung beziehungsweise Kopfüberspritzung 10 besteht aus aufgespritztem Kunststoff. Bevorzugt handelt es sich bei diesem Kunststoff um den Kunststoff PA6-35 (Polyamid 6 mit 35 % Glasfaserverstärkung) und/oder den Kunststoff PA6-50 (Polyamid 6 mit 50 % Glasfaserverstärkung). Die Ummantelung beziehungsweise die Kopfüberspritzung ist direkt auf den Kopfabschnitt 8 aufgebracht. Die Ummantelung 10 ist weiterhin verdrehsicher auf den Kopfabschnitt aufgebracht beziehungsweise verdrehsicher an dem Kopfabschnitt angebracht.

Ein das hintere Ende 5 des Bolzens 2 umschließender Teil der Ummantelung 10 weist einen für ein Einschraubwerkzeug zum Einschrauben der Vorrichtung 1 geeigneten Angriff 11a auf.

In der dargestellten Ausführungsform der Erfindung befindet sich als Angriff in der kopfseitigen Stirnfläche 11 ein Innensechsrund, auch Torx genannt, als Schraubmitnahmeprofil, um zu ermöglichen, dass die Schraube 1 mit einem vorzugsweise maschinell angetriebenen Werkzeug eingeschraubt werden kann. Anstelle des Innensechsrunds kann auch ein Innensechskant, ein Außensechskant oder ein sonstiger geeigneter Angriff für ein Einschraubwerkzeug vorgesehen sein.

Die Kopfüberspritzung 10 weist neben der kopfseitigen Stirnfläche 11 weitere Abschnitte 10a und 10b auf. Der Abschnitt 10a trägt das hintere Gewinde 14. Der Abschnitt 10b ist ein gewindefreier Abschnitt der Kopfüberspritzung 10. Zwischen Kopfüberspritzung 10 und dem Gewinde 6 im vorderen Abschnitt 4 des Bolzens 2 befindet sich ein gewindefreier Abschnitt 16 des Bolzens 2, welcher Abschnitt 16 auch keine Ummantelung aus dem thermisch isolierenden Material 10 aufweist.

Bei dem Torx 11a kann es sich beispielsweise um einen Torx T50 handelt.

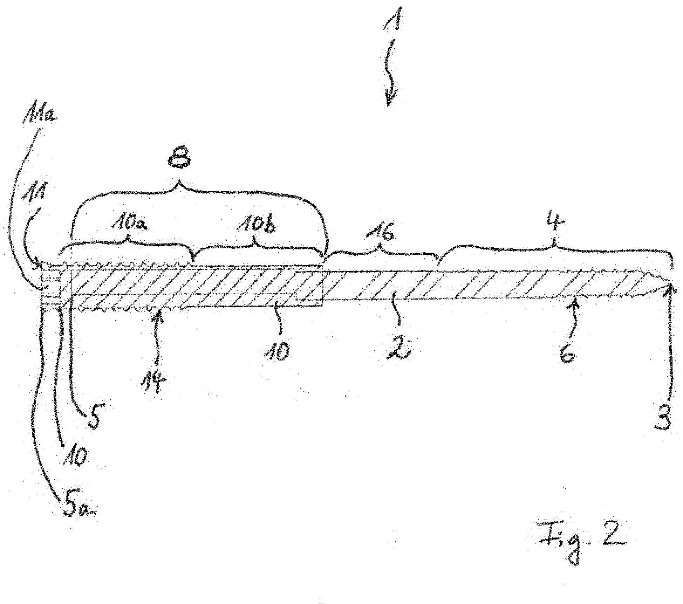

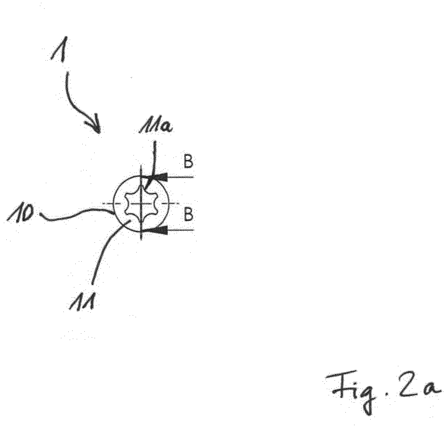

Figur 2 zeigt einen Längsschnitt durch die Ausführungsform der Figur 1 gemäß Figur 2a. Aus dem in Figur 2 dargestellten Schnitt entlang der Linie B-B der Figur 2a durch die Schraube 1 der Figur 1 wird deutlich, dass der Bolzen 2 am Kopfabschnitt 8 bzw. am die Kopfüberspritzung 10 tragenden Abschnitt vollständig von der Kopfüberspritzung 10 ummantelt ist. Am kopfseitigen Abschnitt 8 weist der Metallbolzen 2 somit keinerlei direkten Kontakt mit der Außenwelt auf. Insbesondere ist der Metallbolzen 2 durch die Kopfüberspritzung auch von dem - in der dargestellten Ausführungsform als Torx 11a ausgebildeten Angriff - isoliert, da sich zwischen Torx 11a und Metallbolzen 2 die Kopfüberspritzung 10 befindet. Die Schraube 1 der dargestellten Ausführungsform weist somit den erfindungsgemäßen Vorteil auf, dass der Metallbolzen 2 im Wesentlichen vollständig thermisch entkoppelt ist von der ein hinteres Ende 5a der Schraube 1 bildenden Stirnfläche 11 bzw. dem Torx 11 a.

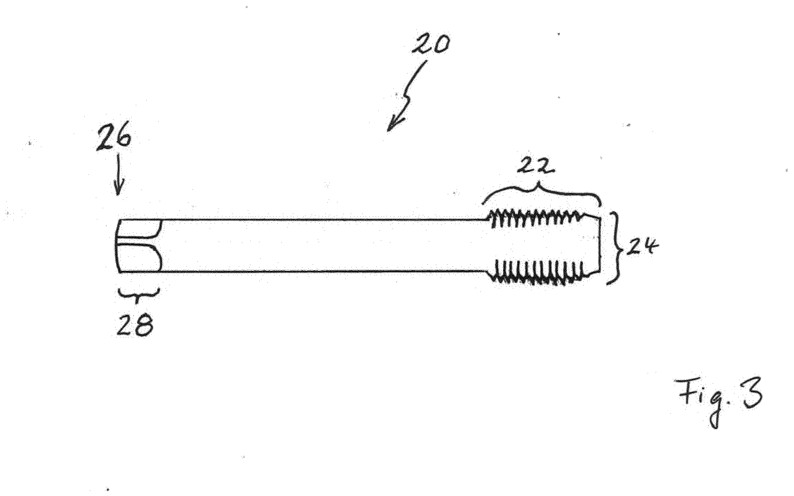

Figur 3 zeigt eine Seitenansicht einer ersten Ausführungsform eines erfindungsgemäßen Gewindebohrers 20. Der Gewindebohrer 20 der Figur 3 kann zur Vorbereitung eines tragenden Bauteils für das Eindrehen einer Vorrichtung 1 gemäß den Figuren 1, 2 und 2a dienen. Der Gewindebohrer 20 der Figur 3 weist einen insbesondere bezüglich Steigung und Durchmesser 24 zu dem in dem vorderen Abschnitt 4 am vorderen Ende 3 des Bolzens 2 vorgesehenen vorderen Gewinde 6 passenden Gewindeschneideabschnitt 22 auf. An seinem dem Gewindeschneideabschnitt abgewandten Ende 26 weist der Gewindebohrer 20 einen Einspannabschnitt 28 auf.

Alternativ und/oder gleichzeitig kann der Gewindebohrer 20 zur Vorbereitung eines Bauelementes für das Eindrehen einer Vorrichtung 1 gemäß der in den Figuren 1, 2 und 2a dargestellten Ausführungsform dienen, wobei der Gewindebohrer 20 in einem solchen Fall bevorzugt alternativ oder zusätzlich einen, insbesondere bezüglich Steigung und Durchmesser 24, zu dem hinteren Kopfabschnitt am hinteren Ende 5 des Bolzens 2 vorgesehenen hinteren Gewinde 14 passenden Gewindeschneideabschnitt 22 aufweist.

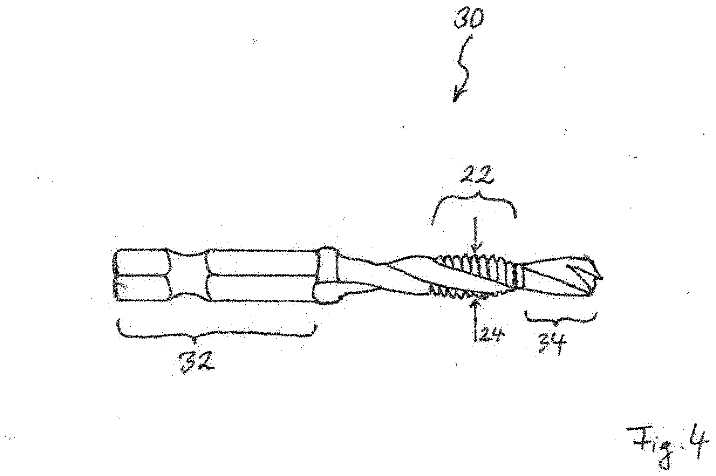

Figur 4 zeigt eine Seitenansicht einer zweiten Ausführungsform 30 eines erfindungsgemäßen Gewindebohrers. Der Gewindebohrer 30 der Figur 4 unterscheidet sich insbesondere von dem Gewindebohrer 20 der Figur 3 dadurch, dass der Gewindebohrer 30 auf seiner einem Einspannabschnitt 32 abgewandten Seite des Gewindeschneideabschnittes 22 einen Bohrabschnitt 34 aufweist. Mit Hilfe dieses Bohrabschnittes 34 lässt sich ein Loch in das tragende Bauteil zur Vorbereitung des Einbringens eines Gewindes mit dem Gewindeschneideabschnitt 22 einbringen bzw. alternativ und/oder gleichzeitig auch ein Loch in ein Bauelement zur Vorbereitung des Einbringens eines Gewindes mit dem Gewindeschneideabschnitt 22 einbringen.

Aus der Vorrichtung 1 der Figuren 1, 2 und 2a und einem der vorstehend beschriebenen Gewindebohrer 20 kann ein System 1, 20, 30 gebildet werden.

## Patentansprüche

1. Vorrichtung (1) zum Befestigen eines Bauelements in einem Abstand zu einem tragenden Bauteil, aufweisend:
einen ein vorderes Ende (3) und ein hinteres Ende (5) aufweisenden Bolzen (2), ein für ein Eindrehen in das Bauteil geeignetes, vorderes Gewinde (6) in einem vorderen Abschnitt (4) an dem vorderen Ende (3) des Bolzens (2), und
eine aus thermisch isolierendem Material gebildete und ein für ein Eindrehen in das Bauelement geeignetes, hinteres Gewinde (14) aufweisende Ummantelung (10) eines hinteren Kopfabschnitts (8) am hinteren Ende (5) des Bolzens (2),
**dadurch gekennzeichnet, dass** die Ummantelung (10) sowohl den Kopfabschnitt (8) als auch das hintere Ende (5) des Bolzens (2) umschließt.

2. Vorrichtung nach Anspruch 1,
**dadurch gekennzeichnet, dass** die Ummantelung (10) aus aufgespritztem Kunststoff besteht.

3. Vorrichtung nach dem vorstehenden Anspruch,
**dadurch gekennzeichnet, dass** es sich bei dem Kunststoff um den Kunststoff PA6-35 (Polyamid 6 mit 35 % Glasfaserverstärkung) und/oder den Kunststoff PA6-50 (Polyamid 6 mit 50 % Glasfaserverstärkung) handelt.

4. Vorrichtung nach einem der vorstehenden Ansprüche,
**dadurch gekennzeichnet, dass** der Bolzen (2) aus, bevorzugt galvanisiertem, Stahl besteht.

5. Vorrichtung nach einem der vorstehenden Ansprüche,
**dadurch gekennzeichnet, dass** die Ummantelung (10) direkt auf den Kopfabschnitt (8) aufgebracht ist.

6. Vorrichtung nach einem der vorstehenden Ansprüche,
**dadurch gekennzeichnet, dass** die Ummantelung (10) verdrehsicher auf den Kopfabschnitt (8) aufgebracht ist.

7. Vorrichtung nach einem der vorstehenden Ansprüche,
**dadurch gekennzeichnet, dass** ein das hintere Ende (5) des Bolzens (2) umschließender Teil der Ummantelung (10) einen für ein Einschraubwerkzeug zum Einschrauben der Vorrichtung (1) geeigneten Angriff (11a) aufweist.

8. Vorrichtung nach dem vorstehenden Anspruch,
**dadurch gekennzeichnet, dass** es sich bei dem Angriff um einen Angriff (11a) in Form eines Torx handelt.

9. Vorrichtung nach einem der vorstehenden Ansprüche,
**dadurch gekennzeichnet, dass** die Ummantelung (10) das hintere Ende (5) des Bolzens (2) derart umschließt, dass es zu einer im Wesentlichen vollständigen thermischen Entkopplung zwischen dem Bolzen (2) und einer ein hinteres Ende (5a) der Vorrichtung (1) bildenden Stirnfläche (11) der Ummantelung (10) kommt.

10. Gewindebohrer (20, 30) zur Vorbereitung eines tragenden Bauteils für das Eindrehen einer Vorrichtung (1), die einem vorderen Abschnitt (4) an einem vorderen Ende (3) eines Bolzens (2) ein Gewinde (6) aufweist, bevorzugt für das Eindrehen einer Vorrichtung (1) nach einem der vorstehenden Ansprüche, aufweisend:
einen, insbesondere bezüglich Steigung und Durchmesser, zu dem Gewinde (6) des Bolzens (2) passenden Gewindeschneideabschnitt (22).

11. Gewindebohrer (20, 30) zur Vorbereitung eines Bauelementes für das Eindrehen einer Vorrichtung (1), die in einem hinteren Abschnitt (8) an einem hinteren Ende (5) eines Bolzens (2) ein Gewinde (14) aufweist, bevorzugt für das Eindrehen einer Vorrichtung nach einem der Ansprüche 1-9, aufweisend:
einen, insbesondere bezüglich Steigung und Durchmesser, zu dem Gewinde (14) des Bolzens (2) passenden Gewindeschneideabschnitt (22).

12. Gewindebohrer (20, 30) nach einem der Ansprüche 10 oder 11,
**dadurch gekennzeichnet, dass** auf einer einem Einspannabschnitt (28, 32) abgewandten Seite des Gewindeschneideabschnittes (22) ein Bohrerabschnitt (34) vorgesehen ist.

13. System (1, 20) zum Befestigen eines Bauelementes in einem Abstand zu einem tragenden Bauteil, aufweisend: eine Vorrichtung nach einem der Ansprüche 1-9, und einen Gewindebohrer (20, 30) nach den Ansprüchen 10 oder 12 und/oder einen Gewindebohrer (20, 30) nach den Ansprüchen 11 oder 12.
